# EUROPEAN PATENT SPECIFICATION

(11) **EP 1 703 099 B1**
(45) Date of publication and mention of the grant of the patent: **03.10.2007**
(21) Application number: 06005665.2
(22) Date of filing: 20.03.2006
(51) Int. Cl.: F01N 3/28, F01N 1/14, F01N 3/34

(54) **Exhaust gas purifying apparatus**
Abgasreinigungsvorrichtung
Dispositif de purification de gaz d'échappement

(30) Priority: 18.03.2005 JP 2005080688; 22.02.2006 JP 2006045870
(43) Date of publication of application: 20.09.2006
(73) Proprietor: YAMAHA HATSUDOKI KABUSHIKI KAISHA, Iwata-shi, Shizuoka 438-8501 (JP)
(72) Inventor: Nishimura, Hidehiro, Yamaha Hatsudoki K.K., Iwata-shi Shizuoka-ken 438-8501 (JP); Takii, Osamu, Yamaha Hatsudoki K.K., Iwata-shi Shizuoka-ken 438-8501 (JP); Kaneda, Yuuji, Yamaha Hatsudoki K.K., Iwata-shi Shizuoka-ken 438-8501 (JP); Endou, Michihiko, Yamaha Hatsudoki K.K., Iwata-shi Shizuoka-ken 438-8501 (JP)
(74) Representative: Grünecker, Kinkeldey, Stockmair & Schwanhäusser Anwaltssozietät

(56) References cited:
- DE-A1- 19 808 500
- FR-A- 2 827 908
- GB-A- 1 357 855
- PATENT ABSTRACTS OF JAPAN vol. 016, no. 119 (M-1225), 25 March 1992 (1992-03-25) & JP 03 286122 A (HONDA MOTOR CO LTD), 17 December 1991 (1991-12-17)

## Description

The present invention relates to an exhaust gas purifying apparatus, according to the preamble part of the independent claim 1.

From FR 2 827 908 an exhaust gas purifying apparatus as indicated above is known.

Conventionally, there exists an exhaust gas purifying apparatus for motorcycles, in which a catalyst is arranged in an exhaust pipe connected to an engine and a secondary air supply pipe is connected to an upstream side of the catalyst to permit a secondary air and exhaust gases to be mixed together, thereby activating an operation of the catalyst (Japanese Utility Model Registration No. 2504008). With a conventional exhaust gas purifying apparatus, however, a connection of the exhaust pipe and the secondary air supply pipe is exposed to an outside. Therefore, there is a fear that a coating on the connection is deteriorated due to heat of exhaust gases flowing through the exhaust pipe to lead to marring of an outward appearance.

In this connection, an exhaust gas purifying apparatus is conceivable, in which a secondary air supply pipe is introduced into a muffler and a connection of an exhaust pipe and the secondary air supply pipe is accommodated in the muffler and exposure of the connection is prevented from.

With the exhaust gas purifying apparatus, in which the secondary air supply pipe is introduced into the muffler, however, the secondary air supply pipe is excessively heated when high-temperature exhaust gases discharged from an end of the exhaust pipe are jetted directly toward the secondary air supply pipe. In this case, an air flowing through an interior of the secondary air supply pipe is heated during its flowing step to expand in volume. Therefore, there is a fear that oxygen flowing into the exhaust pipe is reduced in volume.

The invention has been thought of in view of the situation and it is an objective of the present invention to improve an exhaust gas purifying apparatus as Indicated above so as to prevent high-temperature exhaust gases from heating a secondary air supply pipe and inhibit a decrease in an amount of oxygen which flows into an exhaust pipe.

The objective is solved according to the present invention by an exhaust gas purifying apparatus, in particular for a motorcycle, comprising an exhaust pipe connectable to an engine, a catalyst arranged in the exhaust pipe, and a secondary air supply pipe, wherein there is provided a muffler that accommodates the catalyst, a portion of the secondary air supply pipe and an end of an exhaust pipe downstream portion of the exhaust pipe, through which exhaust gases are discharged, wherein the muffler is further constructed such that the exhaust gases discharged from said end of the exhaust pipe are prevented from being jetted directly toward the secondary air supply pipe, and the secondary air supply pipe is connected to the exhaust pipe within the muffler on an upstream side of a position, in which the catalyst is arranged.

Preferably, the muffler is constructed such that a flow of the exhaust gases is reversed in direction at least once inside the muffler in order to shorten a total length of the muffler in a vehicle length direction.

Further, preferably the muffler comprises a flow inhibiting member provided between said end of the exhaust pipe and said connection between the secondary air supply pipe and the exhaust pipe to inhibit flow of the exhaust gases.

Likewise, the muffler may comprise a flow inhibiting member provided between the end of the exhaust pipe and that portion of the secondary air supply pipe, which is accommodated in the muffler, to inhibit flow of exhaust gases. Therein, that portion of the exhaust pipe itself might function as the flow inhibiting member of the exhaust gases.

According to a preferred embodiment of the exhaust gas purifying apparatus, at least a part of an outer wall of the muffler is double-structured to have an inner wall member and an outer wall member, wherein the secondary air supply pipe extends between the inner wall member and the outer wall member to be introduced into the muffler, and wherein the flow inhibiting member comprises the inner wall member. Therein, the muffler might comprise a hollow drum and a lid member joined to an opening of the hollow drum, and the lid member might be double-structured to have an inner wall member and an outer wall member.

According to another preferred embodiment, the muffler comprises therein a plurality of expansion chambers, and wherein the flow inhibiting member comprises a partition for separation of the expansion chambers of the muffler.

According to yet another preferred embodiment of the exhaust gas purifying apparatus that portion of the secondary air supply pipe, which is accommodated in the muffler, is arranged in a region except that spatial region, into which exhaust gases discharged from the end of the exhaust pipe are jetted directly.

Therein, it is beneficial if the exhaust pipe comprises a straight pipe portion, from an end of which exhaust gases are discharged, wherein the muffler accommodates the end of the straight pipe portion, and wherein the secondary air supply pipe is provided so as to be clear of its intersection of a spatial region in the muffler, which extends in a direction of extension of the straight pipe portion from the end of the straight pipe portion.

Likewise, the secondary air supply pipe might be arranged on a side of the end of the exhaust pipe in a reverse direction to a direction in which exhaust gases discharged from the end are discharged.

According to still another preferred embodiment, there is disclosed a saddle-ride type vehicle comprising the exhaust gas purifying apparatus according to one of the above embodiments.

In the following, the present invention is explained in greater detail with respect to several embodiments thereof in conjunction with the accompanying drawings, wherein:
- Fig. 1: is a side view showing a motorcycle provided with an exhaust gas purifying apparatus according to a first embodiment,
- Fig. 2: is a cross sectional view showing the exhaust gas purifying apparatus,
- Fig. 3: is a perspective view showing a front part of the exhaust gas purifying apparatus in a vehicle traveling direction,
- Fig. 4: is a cross sectional view taken along the line IV-IV in Fig. 2,
- Fig. 5: is a cross sectional view showing an exhaust gas purifying apparatus according to a second embodiment,
- Fig. 6: is a cross sectional view taken along the line VI-VI in Fig. 5,
- Fig. 7: is a cross sectional view showing an exhaust gas purifying apparatus according to a third embodiment,
- Fig. 8: is a cross sectional view taken along the line VIII-VIII in Fig. 7, and
- Fig. 9: is a cross sectional view showing a rear part of an exhaust gas purifying apparatus, according to a fourth embodiment, in a vehicle traveling direction.

### Within the Figures, reference numeral

- 1:: is a motorcycle,
- 2:: is a vehicle body frame,
- 3:: is a front fork,
- 4:: is an engine unit,
- 5:: is a seat,
- 6:: is a front wheel,
- 8:: is a rear wheel,
- 10:: is an engine,
- 15:: is an exhaust pipe,
- 15a:: is an exhaust pipe downstream portion,
- 15i:: is an end of exhaust pipe downstream portion (end of exhaust pipe),
- 17:: is a tail pipe,
- 18:: is a bracket,
- 20, 200, 201, 202:: are embodiments of the exhaust gas purifying apparatus,
- 21:: is an upstream catalyst,
- 22:: is a downstream catalyst,
- 23:: is a secondary air supply pipe,
- 23d:: is a first partial supply pipe,
- 23e:: is a second partial supply pipe,
- 25:: is a secondary air introduction pipe,
- 26:: is a reed valve assembly,
- 30:: is a muffler,
- 32:: is a hollow drum,
- 33:: is a cylindrical-shaped lid member,
- 34:: is a front lid member,
- 35:: is an inner wall member (flow inhibiting member),
- 35a:: is a bottom of inner wall member,
- 36:: is a rear lid member,
- 39:: is an outer wall member,
- 50:: is a primary expansion chamber,
- 51:: is a secondary expansion chamber,
- 52:: is a third expansion chamber,
- 54:: is a second pipe,
- 56:: is a first pipe,
- 57:: is a first partition (flow inhibiting member),
- 58:: is a second partition,
- 61:: is an outer wall member,
- 63:: is an inner wall member.

Embodiments will be described below with reference to the drawings.

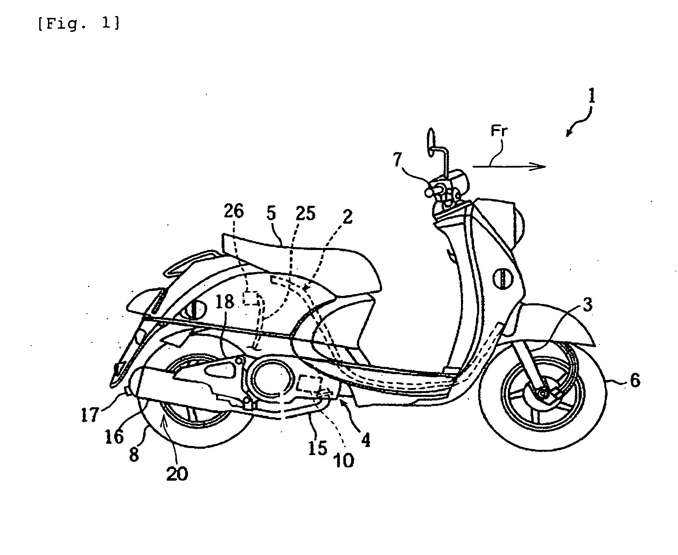

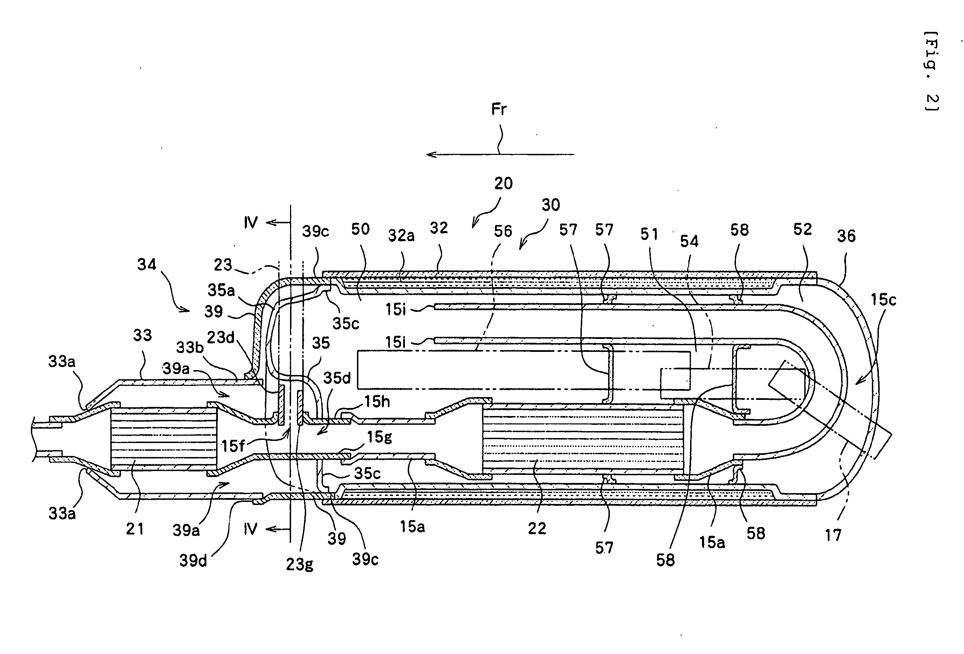

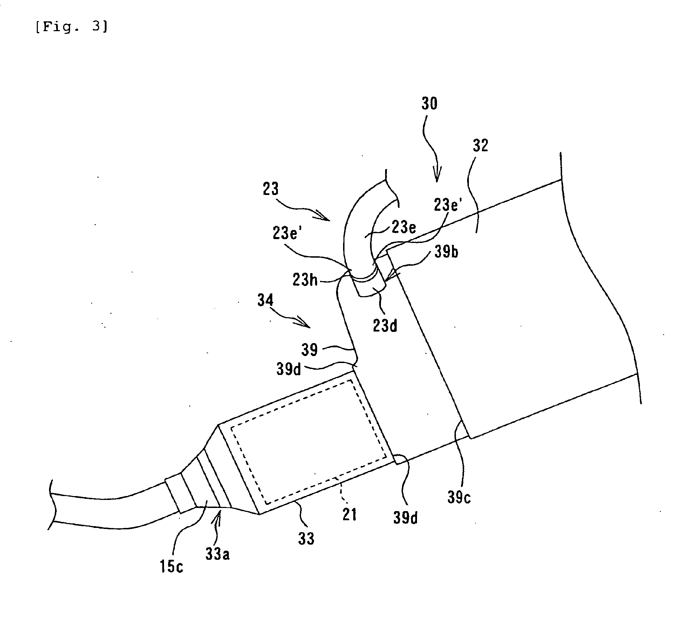

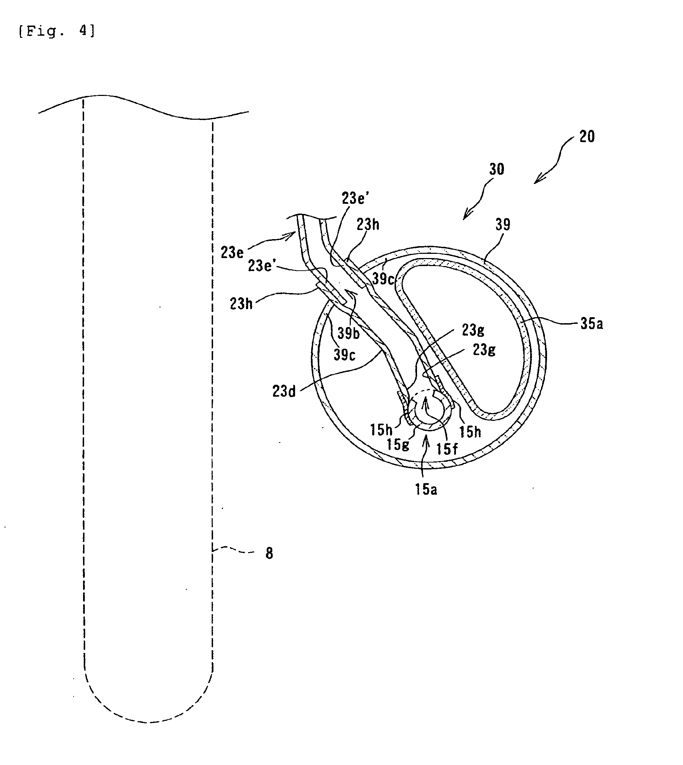

Figs. 1 to 4 are views illustrating an exhaust gas purifying apparatus according to a first embodiment. Fig. 1 is a side view showing an outward appearance of a motorcycle being a configuration of a saddle-ride type vehicle, Fig. 2 is a cross sectional view showing an exhaust gas purifying apparatus 20 according to the first embodiment, and Fig. 3 is a perspective view showing a front part of the exhaust gas purifying apparatus 20 in a vehicle traveling direction. Fig. 4 is a cross sectional view taken along the line IV-IV in Fig. 2.

In Fig. 1, a front end of an underbone type vehicle body frame 2 of a motorcycle 1 supports a front fork 3 to enable the same to turn left and right. A central portion of the vehicle body frame 2 supports a unit swing type engine unit 4 to enable the same to swing vertically. A seat 5 is mounted above the engine unit 4. The front fork 3 mounts a front wheel 6 at a lower end thereof and a handle 7 at an upper end thereof. A rear wheel 8 is arranged at a rear end of the engine unit 4. The engine unit 4 is constructed to unite a four-cycle water-cooled engine with a transmission casing, in which a V-belt type continuously variable transmission is provided, and an engine 10 is mounted with a cylinder shaft directed substantially horizontally and forwardly.

The engine 10 is connected to an exhaust pipe 15, through which exhaust gases discharged upon driving of the engine 10 are discharged rearward in a vehicle traveling direction (a direction indicated by Fr in the figure). The exhaust pipe 15 extends rightward from a portion thereof connected to the engine 10 in the vehicle traveling direction and substantially linearly rearwardly of a vehicle body. A downstream portion 15a (referred below to as a downstream portion of the exhaust pipe, see Fig. 2) of the exhaust pipe 15 is accommodated in a muffler 30. The muffler 30 connects thereto a tail pipe 17, through which exhaust gases are discharged rearward in the vehicle traveling direction.

An exhaust gas purifying apparatus 20 is arranged on a right side of the rear wheel 8 in the vehicle traveling direction to purify NOx, CO, HC in exhaust gases discharged from the engine 10. The exhaust gas purifying apparatus 20 comprises the muffler 30 and the exhaust pipe downstream portion 15a. A bracket 18 is joined to an upper portion of the exhaust gas purifying apparatus 20, the bracket 18 being securedly bolted to the engine unit 4. Thereby, the exhaust gas purifying apparatus 20 is made to swing vertically together with the engine unit 4. A secondary air supply pipe 23 is introduced into the muffler 30 which forms the exhaust gas purifying apparatus 20, an end of the secondary air supply pipe 23 being connected to the exhaust pipe downstream portion 15a (see Figs. 2 to 4).

One end of a secondary air introduction pipe 25 is connected to the other end of the secondary air supply pipe 23, which projects outwardly of the muffler 30, and the other end of the secondary air introduction pipe 25 is connected to a reed valve assembly 26. The reed valve assembly 26 is arranged inside a rear cover, rearwardly downwardly of the seat 5, and above the rear wheel 8. The reed valve assembly 26 has the function of permitting only flow of a secondary air toward a catalyst and blocking flow in an opposite direction.

The exhaust gas purifying apparatus 20 according to the first embodiment will be described in detail with reference to Figs. 2 to 4.

As shown in Fig. 2, the muffler 30, which forms the exhaust gas purifying apparatus 20, comprises a hollow drum 32 being a cylinder having a substantially elliptical-shaped cross section, a front lid member 34 joined to a front opening of the hollow drum 32 in the vehicle traveling direction, and a rear lid member 36 joined to a rear opening in the vehicle traveling direction. The hollow drum 32, the front lid member 34, and the rear lid member 36, respectively, are double-structured. Glass wool 32a is charged between an outside member and an inside member of the hollow drum 32 to enhance the heat insulating property of the muffler 30.

An interior of the muffler 30 is compartmented into a primary expansion chamber 50, a secondary expansion chamber 51, and a third expansion chamber 52 in order from the front in the vehicle traveling direction by a first partition 57 and a second partition 58. A first pipe 56 is provided through the first partition 57 in the primary expansion chamber 50 and the secondary expansion chamber 51 to permit exhaust gases to flow from the primary expansion chamber 50 to the secondary expansion chamber 51. Also, a second pipe 54 is provided through the second partition 58 in the secondary expansion chamber 51 and the third expansion chamber 52 to permit exhaust gases to flow from the secondary expansion chamber 51 to the third expansion chamber 52.

The front lid member 34 comprises an outer wall member 39, an inner wall member (a flow inhibiting member) 35, and a cylindrical-shaped lid member 33. The outer wall member 39 is formed to be substantially bowl-shaped, and formed at a bottom thereof with an introduction port 39a for the exhaust pipe downstream portion 15a. The cylindrical-shaped lid member 33 is formed to be cylindrical-shaped, and one end 33b thereof is joined to an edge 39d of the introduction port 39a of the outer wall member.

The inner wall member 35 is formed to be substantially bowl-shaped, and an edge 35c thereof is formed to be the same in shape as an edge 39c of the outer wall member 39 and joined to an inside of the edge 39c of the outer wall member 39. The inner wall member 35 comprises a bottom 35a, which is deeper than other portion, on a semi-circular portion of a bottom surface thereof (see Fig. 4). The inner wall member 35 is fitted inside the outer wall member and joined in a plurality of locations on the edge 35c thereof to an inside of the edge 39c of the outer wall member 39. In addition, an insertion hole 35d for permitting insertion of the exhaust pipe downstream portion 15a is also formed on the inner wall member 35.

The exhaust pipe downstream portion 15a is introduced into the muffler 30 from an exhaust pipe introduction port 33a on the other side of the cylindrical-shaped lid member 33. The exhaust pipe downstream portion 15a extends lengthwise of the muffler 30 rearward from the front in the vehicle traveling direction, and a rearmost portion 15c of the exhaust pipe downstream portion 15a in the vehicle traveling direction is bent in a U-shaped fashion. An end 15i, through which exhaust gases are discharged, is positioned in the primary expansion chamber 50 positioned forwardmost in the vehicle traveling direction. Thereby, a length of the muffler 30 in a longitudinal direction can be shortened while a length of the exhaust pipe downstream portion 15a accommodated in the muffler 30 is maintained.

Arranged in the exhaust pipe downstream portion 15a are two catalysts, that is, an upstream catalyst 21 which mainly performs reduction, and a downstream catalyst 22 which mainly performs oxidation. The upstream catalyst 21 is arranged in the exhaust pipe downstream portion 15a to be positioned inside the cylindrical-shaped lid member 33. Exhaust gases supplied from an upstream side of the exhaust pipe 15 flow through the upstream catalyst 21 and the downstream catalyst 22, and then are discharged into the primary expansion chamber 50 from the end 15i of the exhaust pipe downstream portion 15a. In addition, an end of the exhaust pipe introduction port 33a of the cylindrical-shaped lid member 33 is tapered, and a tip end of the tapered portion supports a side of the exhaust pipe downstream portion 15a.

The secondary air supply pipe 23 is connected to a portion of the exhaust pipe downstream portion 15a between the outer wall member 39 and the inner wall member 35 and downstream of the upstream catalyst 21. Here, connection of the secondary air supply pipe 23 to the exhaust pipe downstream portion 15a is described with reference to Figs. 4 and 3. In Fig. 4, the rear wheel 8 of the vehicle is shown on the left of the exhaust gas purifying apparatus 20. As shown in figure, an insertion hole 39b is provided on an upper portion of the outer wall member 39 toward the vehicle body, and the secondary air supply pipe 23 is inserted into the muffler 30 from the insertion hole 39b.

The secondary air supply pipe 23 comprises a first partial supply pipe 23d and a second partial supply pipe 23e. In Fig. 4, the bottom 35a of the inner wall member 35 is shown as being semi-circular in cross section. The first partial supply pipe 23d is introduced into the muffler 30 along a side of the bottom 35a of the inner wall member 35. One end 23g of the first partial supply pipe 23d is connected to the exhaust pipe downstream portion 15a arranged in a lower region of the muffler 30. A secondary air inflow port 15f is provided on the exhaust pipe downstream portion 15a, and the one end 23g of the first partial supply pipe 23d and a peripheral edge of the secondary air inflow port 15f are joined together by welding.

In addition, in the vicinity of the secondary air inflow port 15f of the exhaust pipe downstream portion 15a, the exhaust pipe downstream portion 15a comprises a lower semi-cylindrical member 15g which is substantially semi-cylindrical in shape, and an upper semi-cylindrical member 15h which is likewise substantially semi-cylindrical in shape (see Fig. 2). The lower semi-cylindrical member 15g forms a lower side of the exhaust pipe downstream portion 15a, and the upper semi-cylindrical member 15h forms an upper side of the exhaust pipe downstream portion 15a. A side of the upper semi-cylindrical member 15h and a side of the lower semi-cylindrical member 15g are joined together to thereby form the cylindrical-shaped exhaust pipe downstream portion 15a. The secondary air inflow port 15f is formed on the upper semi-cylindrical member 15h. Also, the other end 23h of the first partial supply pipe 23d and a side 23e' of the second partial supply pipe 23e are joined together outside the muffler 30 by welding. Thereby, when the exhaust gas purifying apparatus 20 is to be assembled, the second partial supply pipe 23e can be connected to the other end 23h of the first partial supply pipe 23d after the first partial supply pipe 23d is accommodated in the muffler 30, so that it becomes easy to assemble the exhaust gas purifying apparatus 20.

As shown in Fig. 2, the secondary air supply pipe 23 is introduced into the muffler 30 through a region between the inner wall member 35 and the outer wall member 39 from outside the muffler 30 to be connected to the exhaust pipe downstream portion 15a between the inner wall member 35 and the outer wall member 39. A connection of the exhaust pipe downstream portion 15a and the secondary air supply pipe 23 and a portion (including the end 15i) of the exhaust pipe downstream portion 15a downstream of the connection are accommodated in the muffler 30. Also, in the exhaust pipe downstream portion 15a, a part downstream of the connection of the exhaust pipe downstream portion 15a and the secondary air supply pipe 23 is introduced into a cylindrical-shaped body, which is formed by the inner wall member 35, the hollow drum 32, and the rear lid member 36, through the insertion hole 35d provided on the inner wall member 35.

As described above, the end 15i of the exhaust pipe downstream portion 15a is arranged inside the primary expansion chamber 50 provided forwardmost inside the muffler 30 in the vehicle traveling direction. Also, as shown in Figs. 2 to 4, the first partial supply pipe 23d is introduced into the muffler 30 through a region between the inner wall member 35 and the outer wall member 39 from outside the muffler 30. Therefore, the inner wall member 35 is provided between the end 15i of the exhaust pipe downstream portion 15a and the first partial supply pipe 23d. Then, the inner wall member 35 functions as a flow inhibiting member that inhibits exhaust gases discharged from the exhaust pipe downstream portion 15a from being jetted directly toward the first partial supply pipe 23d.

That is, the flow inhibiting member used as the inner wall member 35 according to the embodiment shields a region from the end 15i of the exhaust pipe downstream portion 15a to a side of the first partial supply pipe 23d accommodated in the muffler 30 in all directions. Therefore, exhaust gases discharged from the end 15i to be jetted toward the first partial supply pipe 23d strike against the inner wall member 35, so that exhaust gases are inhibited from being jetted directly toward the first partial supply pipe 23d.

Further, as described above, the edge 35c of the inner wall member 35 is formed to be the same in shape as the edge 39c of the outer wall member 39, and an outside of the edge 35c and an inside of the edge 39c of the outer wall member 39 are joined together in a plurality of locations. Accordingly, only a small amount of exhaust gases having expanded in the primary expansion chamber 50 to be decreased in temperature flows outside the inner wall member 35 from a clearance formed between the inner wall member 35 and the outer wall member 39. Therefore, the secondary air supply pipe 23 formed by the first partial supply pipe 23d is not heated excessively and a decrease in amount of oxygen in the secondary air is inhibited.

Also, the inner wall member 35 comprises the substantially bowl-shaped bottom 35a formed to have a semi-circular cross section, the bottom 35a being positioned to be opposed to the end 15i of the exhaust pipe downstream portion 15a. Therefore, exhaust gases jetted toward the bottom 35a from the end 15i of the exhaust pipe downstream portion 15a strike against the bottom 35a to be inhibited from flowing toward the secondary air supply pipe 23. Also, since the bottom 35a is formed to be substantially bowl-shaped, exhaust gases do not stagnate on the bottom 35a but smoothly reversed in a jetting direction to flow toward the first pipe 56.

Also, an air flowing in the secondary air supply pipe 23 is caused by heat, which is preserved inside the outer wall member 39, the cylindrical-shaped lid member 33, and the hollow drum 32, to be slightly increased in temperature, as compared with an outside air, while flowing through the first partial supply pipe 23d. As a result, time elapsed until the catalyst reaches its activation temperature is shortened.

In addition, according to the embodiment, while the secondary air supply pipe 23 is introduced into the muffler 30 through the insertion hole 39b formed on the upper portion of the outer wall member 39 toward the vehicle body to be connected to the peripheral edge of the secondary air inflow port 15f formed on the upper semi-cylindrical member 15h. However, a path, along which the secondary air supply pipe 23 is introduced, is not limited thereto. For example, the insertion hole 39b may be formed on a lower portion of the outer wall member 39, and the secondary air inflow port 15f may be formed on the lower semi-cylindrical member 15g. Then, the secondary air supply pipe 23 may be introduced into the muffler 30 through the insertion hole 39b to be connected to the peripheral edge of the secondary air inflow port 15f formed on the lower semi-cylindrical member 15g. In this case, the exhaust pipe downstream portion 15a (the upper semi-cylindrical member 15h) itself is positioned between the end 15i of the exhaust pipe downstream portion 15a and a portion of the secondary air supply pipe 23 accommodated in the muffler 30. Accordingly, the exhaust pipe downstream portion 15a itself can function as a flow inhibiting member of exhaust gases without the provision of the inner wall member 35 in the muffler 30.

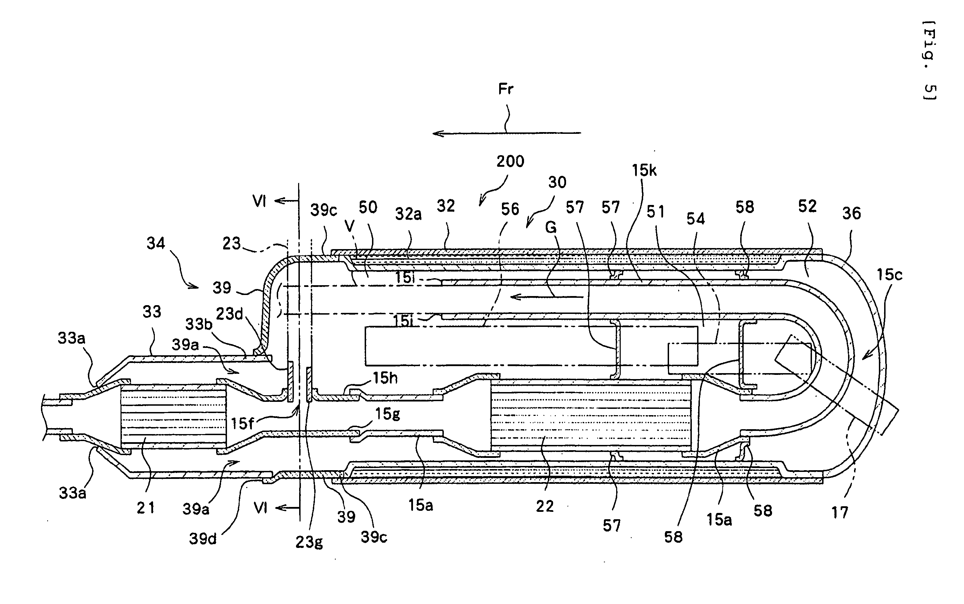

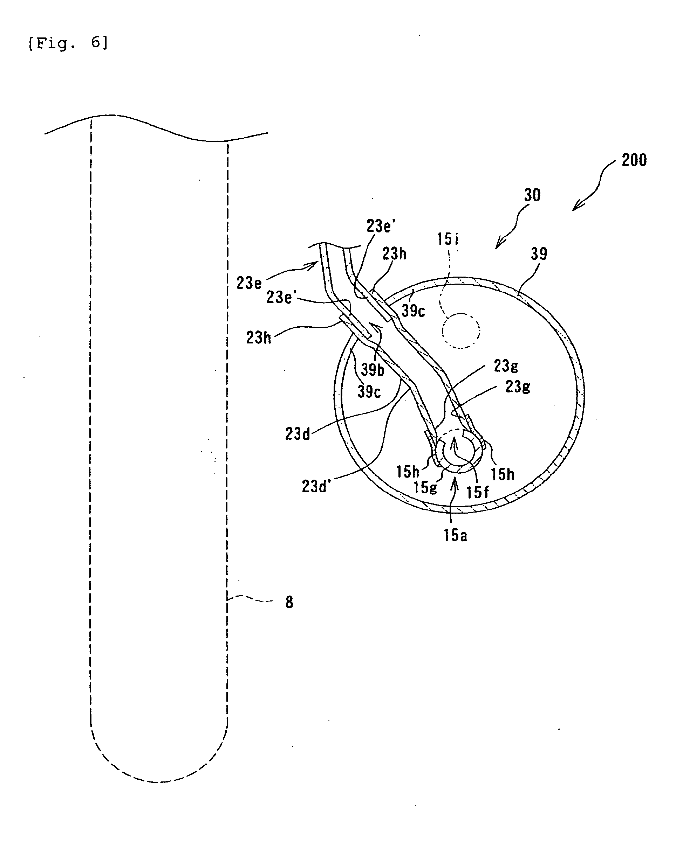

Subsequently, an exhaust gas purifying apparatus 200 according to a second embodiment will be described with reference to Figs. 5 and 6. Fig. 5 shows the exhaust gas purifying apparatus 200 according to the second embodiment, and Fig. 6 is a cross sectional view taken along the line VI-VI in Fig. 5. Here, the same parts of the exhaust gas purifying apparatus 200 according to the second embodiment as those in the exhaust gas purifying apparatus 20 according to the first embodiment are denoted by the same reference numerals as those in the latter, and a detailed explanation therefor is omitted below. Also, according to the present embodiment, while a secondary air supply pipe 23 comprises a first partial supply pipe 23d and a second partial supply pipe 23e, it is the same as that in the first embodiment, and so an explanation therefor is omitted.

An exhaust pipe downstream portion 15a comprises a straight pipe portion 15k, and exhaust gases are discharged into a muffler 30 from an end 15i of the straight pipe portion 15k. A secondary air supply pipe 23 is provided so as to be clear of its intersection of a spatial region V in the muffler 30, which extends in a direction of extension of the straight pipe portion 15k from the end 15i of the straight pipe portion 15k.

Specifically, as shown in Fig. 5, an exhaust pipe downstream portion 15a is introduced into the muffler 30 from an exhaust pipe introduction port 33a of a cylindrical-shaped lid member 33 to extend below the muffler 30 and rearward in a vehicle traveling direction. An upstream catalyst 21 is arranged on an upstream side in a portion of the exhaust pipe downstream portion 15a extended rearward in the vehicle traveling direction. A secondary air inflow port 15f is formed on a downstream side of the upstream catalyst 21, and a downstream catalyst 22 is accommodated on a downstream side of the secondary air inflow port 15f. A rearmost portion 15c of the exhaust pipe downstream portion 15a in the vehicle traveling direction is bent in a U-shaped fashion, and the straight pipe portion 15k contiguous to the rearmost portion 15c in the vehicle traveling direction is extended forward in the vehicle traveling direction. The end 15i of the straight pipe portion 15k is positioned rearwardly of the secondary air inflow port 15f in the vehicle traveling direction.

Exhaust gases flowing through an interior of the straight pipe portion 15k flows forward (a direction indicated by an arrow G in the figure) in the vehicle traveling direction to be discharged into the muffler 30 from the end 15i of the straight pipe portion 15k. The exhaust gases as discharged flow further forward in the vehicle traveling direction while expanding in the muffler 30, and exhaust gases, which have not yet expanded adequately and are especially high in temperature, are jetted in a spatial region V in the muffler 30 which extends in the direction of extension of the straight pipe portion 15k. When the secondary air supply pipe 23 is arranged in a position, in which it intersects the spatial region V, in the muffler 30, the secondary air supply pipe 23 is excessively heated.

According to the embodiment, as shown in Fig. 6, the secondary air supply pipe 23 is introduced into the muffler 30 while being clear of a position opposed to the end 15i of the straight pipe portion 15k. Specifically, the secondary air supply pipe 23 is introduced into the muffler 30 from an insertion hole 39b which is formed on an upper portion of an outer wall member 39 forward in the vehicle traveling direction and toward a vehicle body. The secondary air supply pipe 23 is extended toward a central axis of the muffler 30, bent slightly downward at a bent portion 23d', and extended further. One end 23g of the secondary air supply pipe 23 is joined to a peripheral edge of the secondary air inflow port 15f formed on an upper semi-cylindrical member 15h.

The exhaust pipe downstream portion 15a is extended in a lower region in the muffler 30 and bent at the rearmost portion 15c in the vehicle traveling direction in a U-shaped fashion. Therefore, the end 15i of the straight pipe portion 15k is positioned as shown in Fig. 6 above the exhaust pipe downstream portion 15a extended in a lower region in the muffler 30. As described above, the secondary air supply pipe 23 is introduced into the muffler 30 while being clear of a position opposed to the end 15i of the straight pipe portion 15k. The secondary air supply pipe 23 is arranged in the muffler 30 so as not to intersect the spatial region V, which extends in the direction of extension of the straight pipe portion 15k, and an end 23g thereof is joined to a peripheral edge of the secondary air inflow port 15f formed forwardly of the end 15i in the vehicle traveling direction. Thereby, without the provision of a flow inhibiting member (an inner wall member 35) in the muffler 30, the secondary air supply pipe 23 can be prevented from being heated excessively by exhaust gases. In addition, the insertion hole 39b may be provided optionally, for example, on the outer wall member 39 further toward the vehicle body, or below the muffler 30 to be clear of a position opposed to the end 15i of the straight pipe portion 15k.

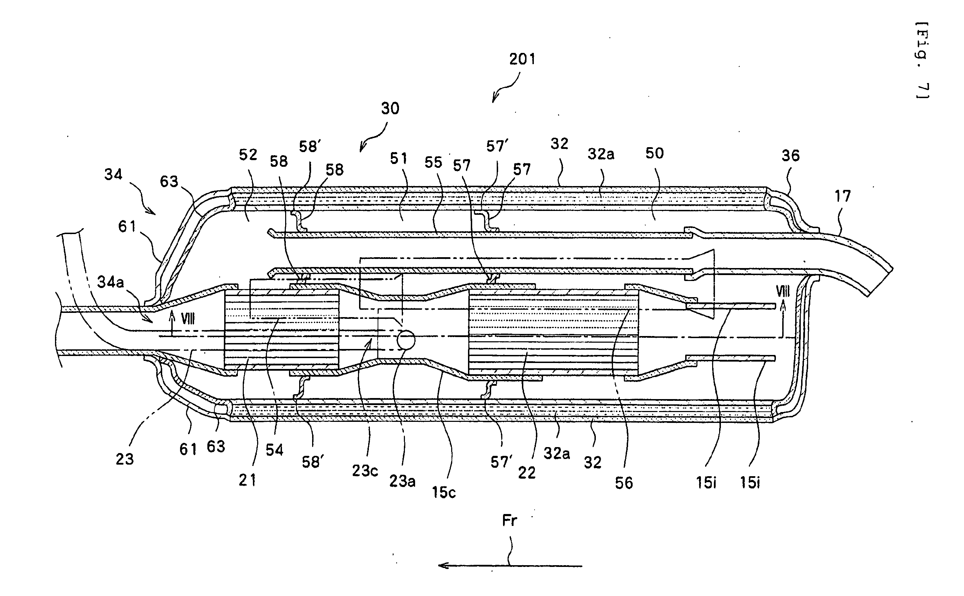

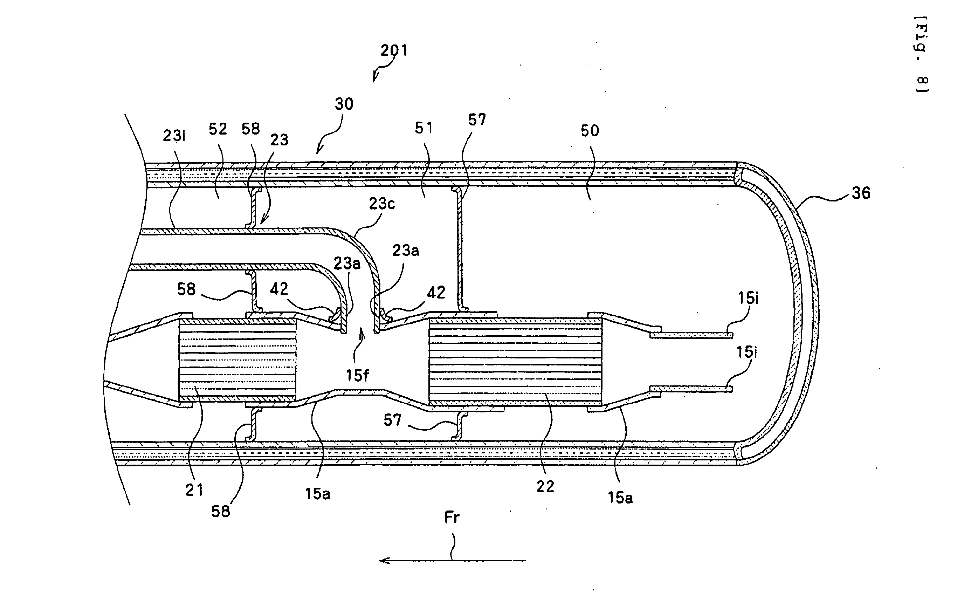

Subsequently, an exhaust gas purifying apparatus 201 according to a third embodiment will be described with reference to Figs. 7 and 8. Fig. 7 shows the exhaust gas purifying apparatus 201 according to the third embodiment, and Fig. 8 is a cross sectional view taken along the line VIII-VIII in Fig. 7. Here, the same parts of the exhaust gas purifying apparatus 201 according to the third embodiment as those in the exhaust gas purifying apparatus 20 according to the first embodiment and/or the second embodiment are denoted by the same reference numerals as those in the latter, and a detailed explanation therefor is omitted below. In addition, piping extending through partitions to enable flow of exhaust gases between respective expansion chambers, and a tail pipe are omitted in Fig. 8. Also, a secondary air supply pipe 23 is indicated by two-dot chain lines in Fig. 7.

As shown in Fig. 7, a muffler 30, which forms the exhaust gas purifying apparatus 201, comprises a hollow drum 32, a bowl-shaped front lid member 34 joined to a front opening of the hollow drum 32 in a vehicle traveling direction, and a rear lid member 36 joined to a rear opening in the vehicle traveling direction.

The hollow drum 32, the front lid member 34, and the rear lid member 36, respectively, are double-structured. Glass wool 32a is charged between an outside member and an inside member of the hollow drum 32. The front lid member 34 comprises a bowl-shaped outer wall member 61 which forms an outer wall of the muffler 30, and a bowl-shaped inner wall member 63 arranged inside the outer wall member 61 to form an inner wall of the muffler 30. The both members are provided with an insertion hole 34a. An exhaust pipe downstream portion 15a extended lengthwise of the muffler 30 is inserted through the insertion hole 34a rearward from the front in the vehicle traveling direction. The whole exhaust pipe downstream portion 15a is accommodated in the muffler 30. An upstream catalyst 21 and a downstream catalyst 22 are arranged in the exhaust pipe downstream portion 15a to be positioned inside the muffler 30.

An interior of the muffler 30 is compartmented into a primary expansion chamber 50, a secondary expansion chamber 51, and a third expansion chamber 52 in order from the rear in the vehicle traveling direction by a first partition 57 and a second partition 58. A first pipe 56 is provided in the primary expansion chamber 50 and the secondary expansion chamber 51 to extend through the first partition 57. Also, a second pipe 54 is provided in the secondary expansion chamber 51 and the third expansion chamber 52 to extend through the second partition 58. An edge 57' of the first partition 57 and an edge 58' of the second partition 58 are joined to an inner peripheral surface of the hollow drum by welding. Also, the first partition 57 is joined to a side of the first pipe 56 by welding, and the second partition 58 is joined to a side of the second pipe 54 by welding. In addition, the exhaust pipe downstream portion 15a extends through the first partition 57 and the second partition 58 and are supported in the muffler 30 by the partitions. Also, a third pipe 55 permitting exhaust gases, which have expanded in the third expansion chamber 52, to be discharged rearwardly of a vehicle, extends through the first partition 58 and the second partition 57 to be connected to a tail pipe 17.

As shown in Fig. 8, a secondary air supply pipe 23 extends inside the third expansion chamber 52 and the secondary expansion chamber 51 of the muffler 30 in the same direction as an axis of the exhaust pipe downstream portion 15a. The secondary air supply pipe 23 is bent at a bent portion 23c positioned in the secondary expansion chamber 51 to be directed toward the exhaust pipe downstream portion 15a, and an end 23a of the secondary air supply pipe 23 is connected to the exhaust pipe downstream portion 15a in the secondary expansion chamber 51.

Specifically, the end 23a of the secondary air supply pipe 23 is joined to a secondary air inflow port 15f provided between the upstream catalyst 21 and the downstream catalyst 22 of the exhaust pipe downstream portion 15a as shown in Fig. 8. The secondary air inflow port 15f is positioned in the secondary expansion chamber 51. A torus-shaped reinforcement member 42 is fitted onto the end 23a of the secondary air supply pipe 23. The reinforcement member 42 is joined to the end 23a of the secondary air supply pipe 23 by welding and also joined to a peripheral portion 15f of the secondary air inflow port 15f provided on a side of the exhaust pipe downstream portion 15a by welding. Thereby, strength, with which the secondary air supply pipe 23 is supported by the exhaust pipe downstream portion 15a, is increased. Also, the secondary air supply pipe 23 extends through the second partition 58 to be supported by the second partition 58. Thereby, an exhaust gas purifying apparatus 201 is realized, which prevents the secondary air supply pipe 23 from fluctuating in the muffler 30 and is excellent in durability.

As shown in Figs. 7 and 8, the first partition 57 is provided between the end 15i of the exhaust pipe downstream portion 15a, through which exhaust gases are discharged into the primary expansion chamber 50, and a connection, at which the secondary air supply pipe 23 is connected to the exhaust pipe downstream portion 15a. Thereby, the first partition 57 functions as a flow inhibiting member that inhibits exhaust gases, which are discharged from the end 15i of the exhaust pipe downstream portion 15a, from being jetted directly toward the secondary air supply pipe 23.

That is, the first partition 57 shields a region from the end 15i of the exhaust pipe downstream portion 15a to a side of the secondary air supply pipe 23 accommodated in the muffler 30 in all directions. According to the embodiment, the end 15i of the exhaust pipe downstream portion 15a is arranged in the primary expansion chamber 50. Also, as described above, the secondary air supply pipe 23 is arranged in the expansion chamber, which is different therefrom, that is, the secondary expansion chamber 51 and the third expansion chamber 52 to be connected to the exhaust pipe downstream portion 15a in the secondary expansion chamber 51. The edge 57' of the first partition 57, which separates the primary expansion chamber 50 and the secondary expansion chamber 51 from each other, is joined to the inner peripheral surface of the hollow drum 32 by welding. Therefore, the first partition 57 serves as a barrier, exhaust gases are not jetted directly toward the secondary air supply pipe 23 but flow through the first pipe 56, and exhaust gases having expanded in the secondary expansion chamber 51 contact first with the secondary air supply pipe 23. Therefore, a secondary air flowing through the secondary air supply pipe 23 is not heated excessively, so that a decrease in amount of oxygen in the secondary air is inhibited.

Also, exhaust gases having expanded in the secondary expansion chamber 51 flow through the second pipe 54 to flow into the third expansion chamber 52 to expand again. Exhaust gases having expanded in the third expansion chamber 52 contact with a portion 23i (an upstream portion of the secondary air supply pipe) of the secondary air supply pipe 23, which is positioned in the third expansion chamber 52. Heat thus generated is transmitted to the secondary air supply pipe portion 23i. Exhaust gases having expanded in the third expansion chamber 52 are lower in temperature than exhaust gases flowing through the exhaust pipe downstream portion 15a, so that the secondary air supply pipe portion 23i is also prevented from being heated excessively.

Also, as described above, the secondary air supply pipe 23 extends through the secondary expansion chamber 51 and the third expansion chamber 52 to be connected to the exhaust pipe downstream portion 15a. Therefore, exhaust gases in the respective expansion chambers raise an air, which flows through the secondary air supply pipe 23, slightly in temperature as compared with an outside air, and so time elapsed until the catalyst reaches its activation temperature is shortened.

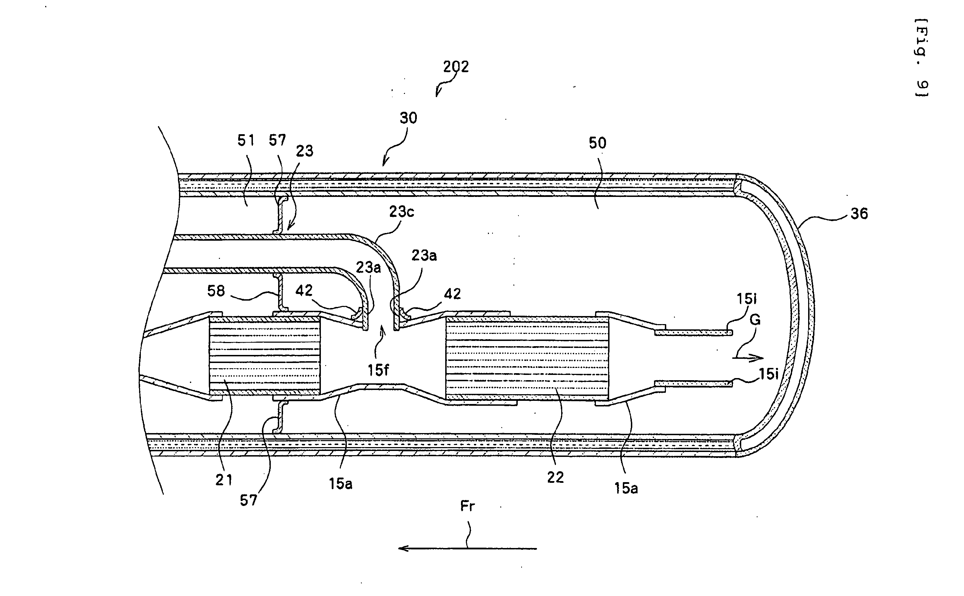

Subsequently, a fourth embodiment will be described in detail with reference to Fig. 9.
Fig. 9 shows an exhaust gas purifying apparatus 202 according to the fourth embodiment, and is a cross sectional view mainly showing a rear part of the exhaust gas purifying apparatus 202 in a vehicle traveling direction. Here, the same parts of the exhaust gas purifying apparatus 202 according to the fourth embodiment as those in the exhaust gas purifying apparatus 20 according to the third embodiment 201 are denoted by the same reference numerals as those in the latter, and a detailed explanation therefor is omitted below. In addition, piping extending through partitions to enable flow of exhaust gases between respective expansion chambers, a tail pipe, and a third expansion chamber are omitted in Fig. 9.

According to the embodiment, a secondary air supply pipe 23 is connected to an exhaust pipe downstream portion 15a positioned in a reverse direction (here, forward in the vehicle traveling direction) from an end 15i of the exhaust pipe downstream portion 15a to a direction, in which exhaust gases discharged from the end 15i are discharged. This is described below in detail. As shown in Fig. 9, an interior of a muffler 30 is compartmented into a primary expansion chamber 50, a secondary expansion chamber 51, and a third expansion chamber (not shown) in order from the rear in the vehicle traveling direction by a first partition 57 and a second partition (not shown). In addition, according to the embodiment, the primary expansion chamber 50 is formed to be larger in volume than that in the embodiments in order to improve the noise eliminating performance of the muffler 30.

The exhaust pipe downstream portion 15a is extended in the muffler 30 rearward from the front in the vehicle traveling direction. An upstream catalyst 21 is arranged on an upstream side in the exhaust pipe downstream portion 15a, a secondary air inflow port 15f is formed on a downstream side thereof, and a downstream catalyst 22 is arranged on a downstream side of the secondary air inflow port 15f. An end 15i of the exhaust pipe downstream portion 15a is arranged in the primary expansion chamber 50 provided rearmost in the vehicle traveling direction. Exhaust gases flowing through the exhaust pipe downstream portion 15a are discharged from the end 15i of the exhaust pipe downstream portion 15a rearward (a direction indicated by an arrow G in the figure) in the vehicle traveling direction to expand in the primary expansion chamber 50 to be decreased in temperature.

The secondary air supply pipe 23 is spaced from the exhaust pipe downstream portion 15a and arranged in parallel to the exhaust pipe downstream portion 15a rearward from the front in the vehicle traveling direction. The secondary air supply pipe is extended through the third expansion chamber and the secondary expansion chamber 51 to the primary expansion chamber 51. The secondary air supply pipe 23 is bent at a bent portion 23c positioned in the primary expansion chamber 50 to be directed toward the exhaust pipe downstream portion 15a. The secondary air supply pipe 23 is joined to a peripheral edge of the secondary air inflow port 15f formed forwardly of the end 15i of the exhaust pipe downstream portion 15a in the vehicle traveling direction, and a reinforcement member 42. The secondary air supply pipe 23 is connected to the exhaust pipe downstream portion 15a positioned in a reverse direction of the end 15i of the exhaust pipe downstream portion 15a to a direction, in which exhaust gases are discharged. Thereby, any portion of the secondary air supply pipe 23 is positioned on an opposite side of exhaust gases just after being discharged from the end 15i of the exhaust pipe downstream portion 15a, with the end 15i therebetween. Therefore, exhaust gases are discharged from the end 15i to expand to be decreased in temperature to then contact first with the secondary air supply pipe 23. Thereby, the secondary air supply pipe 23 is prevented from being heated excessively.

In addition, the teaching of the invention is not limited to the embodiments but susceptible to various modifications. For example, with the exhaust gas purifying apparatuses 20 to 202 described above, the flow inhibiting member also functions as an inner wall member or a partition that compartments the expansion chambers. However, an exclusive member that prevents exhaust gases discharged from the end 15i of the exhaust pipe 15 from being jetted directly toward the secondary air supply pipe 23, may be provided as a flow inhibiting member in the muffler 30.

Also, with the exhaust gas purifying apparatuses 20 to 202 described above, the inner wall member or the partition functioning as a flow inhibiting member is joined at an outer peripheral edge thereof to an inner peripheral surface of the muffler 30 to be supported thereby. However, a method of supporting a flow inhibiting member is not limited thereto. For example, a flow inhibiting member may be supported by a part of the inner peripheral surface of the muffler 30, the exhaust pipe downstream portion 15a, or piping, which enables flow of exhaust gases between the respective expansion chambers.

As has been discussed, the description discloses an embodiment of an exhaust gas purifying apparatus comprising an exhaust pipe connected to an engine, a catalyst arranged in the exhaust pipe, a secondary air supply pipe connected to the exhaust pipe on an upstream side of a position in which the catalyst is arranged, and a muffler that accommodates a connection of the secondary air supply pipe and the exhaust pipe and an end of the exhaust pipe, through which exhaust gases are discharged, and wherein the muffler comprises a flow inhibiting member provided between the end of the exhaust pipe and the connection to inhibit flow of exhaust gases.

According to this embodiment, the flow inhibiting member is provided between the end of the exhaust pipe, through which exhaust gases are discharged, and the connection, to inhibit flow of exhaust gases. Therefore, exhaust gases discharged from the end of the exhaust pipe are prevented from being jetted directly toward the secondary air supply pipe. Consequently, the secondary air supply pipe is not heated excessively, so that it is possible to inhibit a decrease in amount of oxygen which flows into the exhaust pipe from the secondary expansion chamber. Also, since the catalyst is arranged in the exhaust pipe, a major part of heat of exhaust gases are not leaked outside the exhaust pipe but fed to the catalyst, so that an operation of the catalyst is activated.

Here, the flow inhibiting member is arranged between the end of the exhaust pipe and the connection to comprise, for example, a partition that separates an expansion chamber, in which the end of the exhaust pipe is arranged, and the secondary air supply pipe from each other, a shield that inhibits exhaust gases, which are jetted from the end of the exhaust pipe, from reaching the connection linearly, etc. Also, the flow inhibiting member is not limited to a circular shape or an elliptical shape conformed to a cross sectional shape of the muffler in a short side direction but may be various in shape, for example, semi-circular, or the like. Also, the flow inhibiting member may be joined to a whole inner peripheral surface of the muffler to be supported thereby, or may be supported by a part of an inner peripheral surface of the muffler, or a pipe arranged in the muffler. Also, the flow inhibiting member may be a plate-shaped member, or a member partially having a projection and a recess while taking consideration the sizes of the expansion chambers inside the muffler.

Also, the description above discloses a further embodiment of an exhaust gas purifying apparatus comprising an exhaust pipe connected to an engine, a catalyst arranged in the exhaust pipe, a secondary air supply pipe connected to the exhaust pipe on an upstream side of a position in which the catalyst is arranged, and a muffler that accommodates a connection of the secondary air supply pipe and the exhaust pipe and an end of the exhaust pipe, through which exhaust gases are discharged, and wherein the muffler comprises a flow inhibiting member provided between the end of the exhaust pipe and that portion of the secondary air supply pipe, which is accommodated in the muffler, to inhibit flow of exhaust gases. According to this embodiment, exhaust gases discharged from the end of the exhaust pipe are not jetted directly toward the secondary air supply pipe, so that the secondary air supply pipe portion is not heated excessively and a decrease in an amount of oxygen, which flows into the exhaust pipe from the secondary air supply pipe, is inhibited.

Also, in a further embodiment, at least a part of an outer wall of the muffler is double-structured to have an inner wall member and an outer wall member, the secondary air supply pipe extends between the inner wall member and the outer wall member to be introduced into the muffler, and the flow inhibiting member comprises the inner wall member. According to this embodiment, the secondary air supply pipe extends between the inner wall member and the outer wall member to be introduced into the muffler. Therefore, since the inner wall member inhibits exhaust gases from being jetted directly toward the secondary air supply pipe, the secondary expansion chamber is prevented from being excessively increased in temperature. Also, a downstream portion of the secondary expansion chamber toward the exhaust pipe is prevented by the outer wall member from being exposed to an outside air. Consequently, heat preserved inside the muffler raises a low-temperature secondary air slightly in temperature to cause the same to flow into exhaust pipe, thereby activating an operation of the catalyst further.

Also, in the above embodiment, the muffler may comprise a hollow drum and a lid member joined to an opening of the hollow drum, and the lid member may be double-structured to have an inner wall member and an outer wall member. By doing this, since the lid member is double-structured to have an inner wall member and an outer wall member and the inner wall member functions as a flow inhibiting member, an exhaust gas purifying apparatus is realized, which is easy to assemble as compared with the case where, for example, an exclusive member for inhibition of flow of exhaust gases is arranged in the muffler.

Also, in a further embodiment, the muffler comprises therein a plurality of expansion chambers, and the flow inhibiting member is used as a partition for separation of the expansion chambers of the muffler. According to this further embodiment, since the partition for separation of the expansion chambers of the muffler is used as a flow inhibiting member that inhibits flow of exhaust gases, it is possible to inhibit a decrease in amount of oxygen, which flows into the exhaust pipe from the secondary expansion chamber, without an increase in the number of parts for an exhaust gas purifying apparatus.

Also, the description above discloses a further embodiment of an exhaust gas purifying apparatus comprising an exhaust pipe connected to an engine, a catalyst arranged in the exhaust pipe, a secondary air supply pipe connected to the exhaust pipe on an upstream side of a position in which the catalyst is arranged, and a muffler that accommodates a connection of the secondary air supply pipe and the exhaust pipe and an end of the exhaust pipe, through which exhaust gases are discharged, and wherein that portion of the secondary air supply pipe, which is accommodated in the muffler, is arranged in a region except that spatial region, into which exhaust gases discharged from the end of the exhaust pipe are jetted directly. According to this embodiment, that portion of the secondary air supply pipe, which is accommodated in the muffler, is arranged in a region except that region, into which exhaust gases discharged from the end of the exhaust pipe are jetted directly. Therefore, the secondary air supply pipe portion is not heated excessively and a decrease in an amount of oxygen, which flows into the exhaust pipe from the secondary air supply pipe, is inhibited.

Also, in a further embodiment, the exhaust pipe comprises a straight pipe portion, from an end of which exhaust gases are discharged, the muffler accommodates the end of the straight pipe portion, and the secondary air supply pipe is provided so as to be clear of its intersection of a spatial region in the muffler, which extends in a direction of extension of the straight pipe portion from the end of the straight pipe portion. According to the embodiment, the secondary air supply pipe is provided in the muffler to be clear of its intersection of a spatial region in a direction of extension of the straight pipe portion. Therefore, exhaust gases discharged from the end of the straight pipe portion are not jetted directly toward the secondary air supply pipe and the secondary air supply pipe is prevented from being heated excessively. That is, exhaust gases are discharged from the straight pipe portion to expand, decreased in temperature, and then contacts first with the secondary air supply pipe. Consequently, the secondary air supply pipe is prevented from being heated excessively.

Also, according to a further embodiment, the secondary air supply pipe is arranged on an opposite side of the end of the exhaust pipe to a direction in which exhaust gases discharged from the end are discharged. According to this embodiment, the secondary air supply pipe is connected to the exhaust pipe positioned on an opposite side of the end of the exhaust pipe to a direction in which exhaust gases discharged from the end are discharged. Therefore, exhaust gases discharged from the end of the exhaust pipe are inhibited from reaching the secondary air supply pipe directly, and the secondary air supply pipe is prevented from being heated excessively.

Also, the description above discloses an embodiment of a saddle-ride type vehicle with any one of the above exhaust gas purifying apparatuses. The saddle-ride type vehicle comprises, for example, a motorcycle (including a scooter), a four-wheeled buggy, a snowmobile, etc. According to the invention, exhaust gases discharged from the end of the exhaust pipe are prevented from being jetted directly toward the secondary air supply pipe. Therefore, the secondary air supply pipe is prevented from being increased excessively in temperature and a decrease in amount of oxygen in a secondary air being mixed with exhaust gases is inhibited. Then, since an operation of a catalyst is further activated, further clean exhaust gases are discharged from the muffler and so a saddle-ride type vehicle being favorable in terms of an environment is realized.

The description above discloses, as a particularly preferred embodiment, in order to provide an exhaust gas purifying apparatus that prevents high-temperature exhaust gases from heating a secondary air supply pipe and inhibits a decrease in an amount of oxygen, which flows into an exhaust pipe, an exhaust gas purifying apparatus 20 comprising an exhaust pipe 15 connected to an engine, a catalyst 22 arranged in the exhaust pipe 15, a secondary air supply pipe 23 connected to the exhaust pipe 15 on an upstream side of a position in which the catalyst 22 is arranged, and a muffler 30 that accommodates a connection of the secondary air supply pipe 23 and the exhaust pipe 15 and an end 15i of the exhaust pipe 15, through which exhaust gases are discharged. The muffler 30 comprises a flow inhibiting member (an inner wall member 35) provided between the end 15i of the exhaust pipe 15 and the connection to inhibit flow of exhaust gases.

## Claims

1. Exhaust gas purifying apparatus (20, 200, 201, 202), in particular for a motorcycle, comprising
an exhaust pipe (15) connectable to an engine (4),
a catalyst (22) arranged in the exhaust pipe (15), and
a secondary air supply pipe (23), **characterized by**
a muffler (30) that accommodates the catalyst (22), a portion (23d) of the secondary air supply pipe (23) and an end (15i) of an exhaust pipe downstream portion (15a) of the exhaust pipe (15), through which exhaust gases are discharged, wherein the muffler (30) is further constructed such that the exhaust gases discharged from said end (15i) of the exhaust pipe (15) are prevented from being jetted directly toward the secondary air supply pipe (23), and the secondary air supply pipe (23) is connected to the exhaust pipe (15) within the muffler (30) on an upstream side of a position, in which the catalyst (22) is arranged.

2. Exhaust gas purifying apparatus according to claim 1, **characterized in that** the muffler (30) is constructed such that a flow of the exhaust gases is reversed in direction at least once inside the muffler (30) in order to shorten a total length of the muffler (30) in a vehicle length direction.

3. Exhaust gas purifying apparatus according to claim 1 or 2, **characterized in that** the muffler (30) comprises a flow inhibiting member (35) provided between said end (15i) of the exhaust pipe (15) and said connection between the secondary air supply pipe (23) and the exhaust pipe (15) to inhibit flow of the exhaust gases.

4. Exhaust gas purifying apparatus according to claim 1 or 2, **characterized in that** the muffler (30) comprises a flow inhibiting member provided between the end (15i) of the exhaust pipe (15) and that portion (23d) of the secondary air supply pipe (23), which is accommodated in the muffler, to inhibit flow of exhaust gases.

5. Exhaust gas purifying apparatus according to claim 4, **characterized in that** said exhaust pipe downstream portion (15a) of the exhaust pipe (15) itself functions as the flow inhibiting member of the exhaust gases.

6. Exhaust gas purifying apparatus according to one of the claims 1 to 3, **characterized in that** at least a part of an outer wall (39) of the muffler (30) is double-structured to have an inner wall member and an outer wall member, wherein the secondary air supply pipe (23) extends between the inner wall member and the outer wall member to be introduced into the muffler (30), and wherein the flow inhibiting member (35) comprises the inner wall member.

7. Exhaust gas purifying apparatus according to claim 6, **characterized in that** the muffler (30) comprises a hollow drum (32) and a lid member (33) joined to an opening of the hollow drum (32), and wherein the lid member (33) is double-structured to have an inner wall member and an outer wall member.

8. Exhaust gas purifying apparatus according to one of the claims 1 to 3, 6 and 7, **characterized in that** the muffler (30) comprises therein a plurality of expansion chambers (50,51,52), and wherein the flow inhibiting member (35) comprises a partition for separation of the expansion chambers (50,51,52) of the muffler (30).

9. Exhaust gas purifying apparatus according to claim 1 or 2, **characterized in that that** portion of the secondary air supply pipe (23), which is accommodated in the muffler (30), is arranged in a region except that spatial region (V), into which exhaust gases discharged from the end (15i) of the exhaust pipe (15) are jetted directly.

10. Exhaust gas purifying apparatus according to claim 8, **characterized in that** the exhaust pipe (15) comprises a straight pipe portion (15k), from an end of which exhaust gases are discharged, wherein the muffler (30) accommodates the end of the straight pipe portion (15k), and wherein the secondary air supply pipe (23) is provided so as to be clear of its intersection of a spatial region (V) in the muffler (30), which extends in a direction of extension of the straight pipe portion (15k) from the end of the straight pipe portion (15k).

11. Exhaust gas purifying apparatus according to claim 9, **characterized in that** the secondary air supply pipe (23) is arranged on a side of the end of the exhaust pipe (15) in a reverse direction to a direction in which exhaust gases discharged from the end are discharged.

12. Saddle-ride type vehicle comprising the exhaust gas purifying apparatus according to one of the claims 1 to 11.

## Patentansprüche

1. Abgasreinigungsvorrichtung (20, 200, 201, 202), insbesondere für ein Motorrad, aufweisend
ein Abgasrohr (15), verbindbar mit einem Motor (4),
einen Katalysator (22), angeordnet in dem Abgasrohr (15), und
einen Schalldämpfer (30), der den Katalysator (22), einen Abschnitt (23d) des sekundären Luftzuführungsrohr (23) und ein Ende (15) des Abgasrohres stromab des Abschnittes (15a) des Abgasrohres (15), durch das Abgase abgegeben werden, unterbringt, wobei der Schalldämpfer (30) außerdem derart aufgebaut ist, dass die Abgase, abgegeben von dem Ende (15) des Abgasrohres daran gehindert werden, direkt in die Richtung zu dem sekundären Luftzuführungsrohr (23) abgegeben zu werden, und das sekundäre Luftzuführungsrohr (23) mit dem Abgasrohr (15) innerhalb des Schalldämpfers (30) an einer stromaufwärtigen Seite einer Position verbunden ist, in der der Katalysator (22) angeordnet ist.

2. Abgasreinigungsvorrichtung nach Anspruch 1, **dadurch gekennzeichnet, dass** der Schalldämpfer (30) derart aufgebaut ist, dass eine Strömung der Abgase zumindest einmal im Inneren des Schalldämpfers (30) in seiner Richtung umgekehrt wird, um eine Gesamtlänge des Schalldämpfers (30) in einer Fahrzeuglängsrichtung zu verkürzen.

3. Abgasreinigungsvorrichtung nach Anspruch 1 oder 2, **dadurch gekennzeichnet, dass** der Schalldämpfer (30) ein Strömungshemmteil (35) aufweist, vorgesehen zwischen dem Ende (15i) des Abgasrohres (15) und der Verbindung zwischen dem sekundären Luftzuführungsrohr (23) und dem Abgasrohr (15), um die Strömung des Abgases zu hemmen.

4. Abgasreinigungsvorrichtung nach Anspruch 1 oder 2, **dadurch gekennzeichnet, dass** der Schalldämpfer (30) ein Strömungshemmteil (35) aufweist, vorgesehen zwischen dem Ende (15i) des Abgasrohres (15) und jenem Abschnitt (23d) des sekundären Luftzuführungsrohres (23), das in dem Schalldämpfer (30) untergebracht ist, um die Strömung des Abgases zu hemmen.

5. Abgasreinigungsvorrichtung nach Anspruch 4, **dadurch gekennzeichnet, dass** der stromabwärtige Abschnitt (15a) des Abgasrohres (15) selbst als das Strömungshemmteil des Abgases funktioniert.

6. Abgasreinigungsvorrichtung nach einem der Ansprüche 1 bis 3, **dadurch gekennzeichnet, dass** zumindest ein Teil einer Außenwand (39) des Schalldämpfers (30) doppelt- strukturiert ist, um ein inneres Wandteil und ein äußeres Wandteil zu haben, wobei sich das sekundäre Luftzuführungsrohr (23) zwischen dem Innenwandteil und dem Außenwandteil erstreckt, um in den Schalldämpfer (30) eingeführt zu werden, und wobei das Strömungshemmteil (35) das innere Wandteil ist.

7. Abgasreinigungsvorrichtung nach Anspruch 6, **dadurch gekennzeichnet, dass** der Schalldämpfer (30) eine hohle Trommel (32) und ein Deckelteil (33), verbunden mit einer Öffnung der hohlen Trommel (32), aufweist, und wobei das Deckelteil (33) doppelt- strukturiert ist, um ein inneres Wandteil und ein äußeres Wandteil zu haben.

8. Abgasreinigungsvorrichtung nach einem der Ansprüche 1 bis 3, 6 und 7, **dadurch gekennzeichnet, dass** der Schalldämpfer (30) darin eine Mehrzahl von Ausdehnungskammern (50, 51,52) aufweist, und wobei das Strömungshemmteil (35) eine Trennwand zum Trennen der Ausdehnungskammern (50, 51,52) des Schalldämpfers (30) ist.

9. Abgasreinigungsvorrichtung nach einem der Ansprüche 1 oder 2, **dadurch gekennzeichnet, dass** jener Abschnitt des sekundären Luftzuführungsrohres (23), der in dem Schalldämpfer (30) untergebracht ist, in einem Bereich, ausgenommen jenes räumlichen Bereichs (V) angeordnet ist, in den Abgase, abgegeben von dem Ende (15i) des Abgasrohres (15), direkt eingeströmt werden.

10. Abgasreinigungsvorrichtung nach Anspruch 8, **dadurch gekennzeichnet, dass** das Abgasrohr (15) einen geraden Rohrabschnitt (15k), von dessen einem Ende Abgase abgegeben werden, aufweist, wobei der Schalldämpfer (30) das Ende des geraden Rohrabschnittes (15k) aufnimmt und wobei das sekundäre Luftzuführungsrohr (23) vorgesehen ist, um von seiner Kreuzung mit einem räumlichen Bereich (V) in dem Schalldämpfer (30) frei zu sein, der sich in einer Ausdehnungsrichtung des geraden Rohrabschnittes (15k) von dem Ende des geraden Rohrabschnittes (15k) erstreckt.

11. Abgasreinigungsvorrichtung nach Anspruch 9, **dadurch gekennzeichnet, dass** das sekundäre Luftzuführungsrohr (23) auf einer Seite des Endes des Abgasrohres (15) in einer entgegengesetzten Richtung zu einer Richtung angeordnet ist, in der von dem Ende abgegebenen Abgase abgegeben werden.

12. Fahrzeug vom Aufsitz- Typ, mit der Abgasreinigungsvorrichtung nach einem der Ansprüche 1 bis 11.

## Revendications

1. Dispositif de purification de gaz d'échappement (20, 200, 201, 202), en particulier pour une motocyclette, comportant
un tuyau d'échappement (15) pouvant être relié à un moteur (4),
un catalyseur (22) agencé dans le tuyau d'échappement (15), et
un tuyau d'alimentation en air secondaire (23), **caractérisé par**
un pot d'échappement (30) qui reçoit le catalyseur (22), une partie (23b) du tuyau d'alimentation en air secondaire (23) et une extrémité (15i) d'une partie aval de tuyau d'échappement (15a) du tuyau d'échappement (15), à travers laquelle des gaz d'échappement sont évacués, dans lequel le pot d'échappement (30) est en outre construit de telle sorte que les gaz d'échappement évacués par ladite extrémité (15i) du tuyau d'échappement (15) sont dans l'impossibilité d'être projetés directement vers le tuyau d'alimentation en air secondaire (23), et le tuyau d'alimentation en air secondaire (23) est connecté au tuyau d'échappement (15) dans le pot d'échappement (30) sur un côté amont d'une position dans laquelle le catalyseur (22) est agencé.

2. Dispositif de purification de gaz d'échappement selon la revendication 1, **caractérisé en ce que** le pot d'échappement (30) est construit de telle sorte qu'un écoulement des gaz d'échappement a sa direction inversée au moins une fois à l'intérieur du pot d'échappement (30) pour raccourcir une longueur totale du pot d'échappement (30) dans une direction de longueur du véhicule.

3. Dispositif de purification de gaz d'échappement selon la revendication 1 ou 2, **caractérisé en ce que** le pot d'échappement (30) comporte un élément anti-écoulement (35) agencé entre ladite extrémité (15i) du tuyau d'échappement (15) et ladite connexion entre le tuyau d'alimentation en air secondaire (23) et le tuyau d'échappement (15), pour empêcher un écoulement des gaz d'échappement.

4. Dispositif de purification de gaz d'échappement selon la revendication 1 ou 2, **caractérisé en ce que** le pot d'échappement (30) comporte un élément anti-écoulement agencé entre l'extrémité (15i) du tuyau d'échappement (15) et la partie (23d) du tuyau d'alimentation en air secondaire (23) qui est reçue dans le pot d'échappement, pour empêcher un écoulement des gaz d'échappement.

5. Dispositif de purification de gaz d'échappement selon la revendication 4, **caractérisé en ce que** ladite partie aval de tuyau d'échappement (15a) du tuyau d'échappement (15) fonctionne elle-même en tant qu'élément anti-écoulement des gaz d'échappement.

6. Dispositif de purification de gaz d'échappement selon l'une quelconque des revendications 1 à 3, **caractérisé en ce qu'**au moins une partie d'une paroi extérieure (39) du pot d'échappement (30) est à double structure pour avoir un élément de paroi intérieur et un élément de paroi extérieur, dans lequel le tuyau d'alimentation en air secondaire (23) s'étend entre l'élément de paroi intérieur et l'élément de paroi extérieur pour être introduit dans le pot d'échappement (30), et dans lequel l'élément anti-écoulement (35) comporte l'élément de paroi intérieur.

7. Dispositif de purification de gaz d'échappement selon la revendication 6, **caractérisé en ce que** le pot d'échappement (30) comporte un corps cylindrique creux (32) et un élément formant couvercle (33) relié à une ouverture du corps cylindrique creux (32), et dans lequel l'élément formant couvercle (33) est à double structure pour avoir un élément de paroi intérieur et un élément de paroi extérieur.

8. Dispositif de purification de gaz d'échappement selon l'une quelconque des revendications 1 à 3, 6 et 7, **caractérisé en ce que** le pot d'échappement (30) comporte dans celui-ci une pluralité de chambres de détente (50, 51, 52), et dans lequel l'élément anti-écoulement (35) comporte une séparation pour séparation des chambres de détente (50, 51, 52) du pot d'échappement (30).

9. Dispositif de purification de gaz d'échappement selon la revendication 1 ou 2, **caractérisé en ce que** la partie du tuyau d'alimentation en air secondaire (23) qui est reçue dans le pot d'échappement (30), est agencée dans une zone, exceptée la zone spatiale (V), dans laquelle des gaz d'échappement évacués à partir de l'extrémité (15i) du tuyau d'échappement (15) sont projetés directement.

10. Dispositif de purification de gaz d'échappement selon la revendication 8, **caractérisé en ce que** le tuyau d'échappement (15) comporte une partie de tuyau droite (15k), à partir d'une extrémité de laquelle des gaz d'échappement sont évacués, dans lequel le pot d'échappement (30) reçoit l'extrémité de la partie de tuyau droite (15k), et dans lequel le tuyau d'alimentation en air secondaire (23) est fourni de manière à être dégagé par rapport à son intersection d'une zone spatiale (V) dans le pot d'échappement (30), qui s'étend dans une direction d'extension de la partie de tuyau droite (15k) à partir de l'extrémité de la partie de tuyau droite (15K).

11. Dispositif de purification de gaz d'échappement selon la revendication 9, **caractérisé en ce que** le tuyau d'alimentation en air secondaire (23) est agencé sur un côté de l'extrémité du tuyau d'échappement (15) dans une direction inverse à une direction dans laquelle des gaz d'échappement évacués à partir de l'extrémité sont évacués.

12. Véhicule du type à selle que l'on chevauche, comportant le dispositif de purification de gaz d'échappement selon l'une quelconque des revendications 1 à 11.
